# EUROPÄISCHE PATENTSCHRIFT

(11) **EP 4 056 413 B1**
(45) Veröffentlichungstag und Bekanntmachung des Hinweises auf die Patenterteilung: **11.12.2024**
(21) Anmeldenummer: 22159395.7
(22) Anmeldetag: 01.03.2022
(51) Int. Cl.: B60L 53/39, H01F 38/14, H02J 50/12, H02J 7/00, H02J 50/10, H02J 50/00, B60L 53/126, H02J 50/40, H02J 50/90, B60L 53/30, B60M 1/36, B60M 7/00

(54) **BATTERIELADEVORRICHTUNG FÜR INDUKTIVES LADEN, INSBESONDERE DYNAMISCHES UND/ODER STATIONÄRES INDUKTIVES LADEN, EINER TRAKTIONSBATTERIE EINES FAHRZEUGS**
BATTERY CHARGING DEVICE FOR INDUCTIVE CHARGING, IN PARTICULAR DYNAMIC AND / OR STATIONARY INDUCTIVE CHARGING, OF A TRACTION BATTERY OF A VEHICLE
DISPOSITIF DE CHARGE DE BATTERIE POUR LA CHARGE INDUCTIVE, EN PARTICULIER LA CHARGE INDUCTIVE DYNAMIQUE ET/OU STATIONNAIRE, D'UNE BATTERIE DE TRACTION D'UN VÉHICULE

(30) Priorität: 11.03.2021 DE 102021105924; 27.04.2021 DE 102021110741
(43) Veröffentlichungstag der Anmeldung: 14.09.2022
(73) Patentinhaber: STILL GmbH, 22113 Hamburg (DE)
(72) Erfinder: HERRMANN, Udo, 63867 Johannesberg (DE); IGNATOV, Marina, 24114 Kiel (DE)
(74) Vertreter: Patentship Patentanwaltgesellschaft

(56) Entgegenhaltungen:
- EP-A1- 2 990 247
- EP-A1- 3 000 934
- WO-A2-2011/043628
- DE-A1- 102016 119 677
- DE-A1- 102018 209 882
- GB-A- 2 505 516
- GB-A- 2 522 852
- JP-A- 2015 179 704
- US-A1- 2013 300 204

## Beschreibung

Die Erfindung betrifft eine Batterieladevorrichtung für induktives Laden, insbesondere dynamisches und/oder stationäres induktives Laden, einer Traktionsbatterie eines, auf einem Boden fahrbaren, Fahrzeugs, insbesondere eines bodengebundenen Flurförderzeugs, mit nebeneinander angeordneten, vom Fahrzeug überfahrbaren, Lademodulen, in denen jeweils mindestens eine Primärspule angeordnet ist, welche elektrische Leistung an eine Sekundärspule des Fahrzeugs übertragen kann, so dass die Traktionsbatterie während der Überfahrt des Fahrzeugs geladen werden kann, wobei die Lademodule auf den Boden auflegbar sind und mindestens ein Anfangsmodul sowie mindestens ein Endmodul umfassen.

Bei Flurförderzeugen ist es üblich und Stand der Technik, dass Traktionsbatterien entweder bei einem Mehrschichtbetrieb zum Laden aus einem Batteriefach entnommen und gegen eine aufgeladene Traktionsbatterie ausgewechselt werden, oder der Fahrer gegen Ende seiner Arbeitsschicht ein Ladegerät über eine Steckerverbindung mit der Traktionsbatterie verbindet, um diese während der Arbeitspause aufzuladen. Typischerweise erfolgt dies pro Arbeitsschicht mindestens einmal, da eine Traktionsbatterie eines batterieelektrischen Flurförderzeugs im Regelfall so bemessen wird, dass mit einer Ladung der Traktionsbatterie eine komplette Arbeitsschicht gefahren und gearbeitet werden kann.

Überdies ist es bei Blei-Säurebatterien anzustreben, diese mindestens bis zu einem gewissen Maß zu entladen, bevor ein Wiederaufladen erfolgt, da die Technologie dieser Batterien nicht für ein Zwischenladen geeignet ist und sich beispielsweise unerwünschte Memory-Effekte einstellen können.

Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen, dass sie gegenüber einem Blei-Säureakkumulator eine höhere Energiedichte in Bezug auf Gewicht und/oder Volumen aufweisen und eine andere Technik als eine Blei-Säure Reaktion für die Energiespeicherung nutzen. Hinzu kommt bei vielen Hochleistungsbatterien als Merkmal, dass eine hohe Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Zunehmend in größerem Umfang eingesetzt werden als Beispiel solcher Hochleistungsbatterien Lithium-lonenbatterien, die sich durch hohe Energiedichte auszeichnen und nur einem geringen Memoryeffekt unterliegen sowie ein Entladen der Batterie bzw. Aufladen der Batterie mit großer Leistung ermöglichen.

Besonders vorteilhaft ist der Einsatz solcher Hochleistungsbatterien bei Fahrzeugen und beispielsweise bei Flurförderzeugen, da aufgrund der hohen Energiedichte in Bezug auf das Volumen bei dem vorgegebenen Bauraum für die Traktionsbatterie eine größere Menge elektrische Energie gespeichert werden kann und somit die Reichweite eines Fahrzeugs bzw. die Einsatzdauer des Flurförderzeugs vergrößert werden kann. Insbesondere ist es jedoch möglich, solche Hochleistungsbatterie und vor allem Lithium-Ionenbatterien zwischenzuladen und somit kurze Arbeitspausen oder sonstige Möglichkeiten zum Wiederaufladen der Traktionsbatterie zu nutzen. Durch ein Zwischenladen wird es auch möglich, eine kleinere Kapazität für die Traktionsbatterie zu wählen und dadurch Kosten einzusparen.

Für das Laden von Traktionsbatterien von Elektrofahrzeugen ist es bekannt, ein induktives Ladungssystem einzusetzen, bei dem eine Ladeeinheit über eine Primärspule mit einer Sekundärspule des Fahrzeugs induktiv koppelt und elektrische Leistung überträgt, die beispielsweise dazu dient, die Traktionsbatterie des Elektrofahrzeugs aufzuladen. Eine optimale Leistungsübertragung ist dann möglich, wenn die Primärspule und die Sekundärspule möglichst parallel ausgerichtet sind und einen möglichst kleinen Abstand aufweisen. Das Laden kann während des Stillstands des Elektrofahrzeugs an einer Ladestation geschehen, aber auch beispielsweise während der Fahrt, wenn Ladeeinheiten mit Primärspulen in der Fahrbahnfläche eingelassen sind.

Als Problem erweist sich dabei eine flexible Anpassung der wirksamen und effektiven Größe der Primärspule. So kann es wünschenswert sein, eine große Querschnittsfläche der Primärspule zu erreichen mit einer entsprechend gleichgroßen Querschnittsfläche der Sekundärspule, um dadurch eine hohe Leistungsübertragung zu ermöglichen. Ebenso ist es vorteilhaft, eine möglichst große Querschnittsfläche der Primärspule zu erreichen, wenn die Querschnittsfläche der Sekundärspule deutlich kleiner ist, um auf diesem Weg die Positionierung zu erleichtern. Beispielsweise kann Rangieraufwand vermieden werden, wenn ein Flurförderzeug oder Elektrofahrzeug über einer Ladeeinheit mit einer in der Fahrbahnfläche angeordneten Primärspule abgestellt wird, solange die gesamte Querschnittsfläche der im Bodenbereich des Flurförderzeugs angeordneten Sekundärspule aufgrund der großen Querschnittsfläche der Primärspule überdeckt wird. Wenn ein Aufladen während einer Fahrt eines Fahrzeugs stattfinden soll, muss ein Fahrweg als Ladestation mit einer Primärspule überdeckt werden. Hier ist es wünschenswert, dass diese nicht die ganze Zeit aktiviert sein muss und daher anzustreben, die Primärspule in mehrere aufeinanderfolgende aufzuteilen. Dabei muss in Fahrtrichtung jeweils die nächste Primärspule aktiviert werden.

Zur flexiblen Anpassung einer Ladestation und der Größe und Form der Primärspule ist es bekannt, Module einzusetzen, aus denen eine Gesamtfläche aus Primärspulen der Module zusammen gesetzt wird. Dies wird beispielsweise offenbart in der DE 10 2013 015 424 A1 für im Boden angeordnete Primärspulen.

Aus der DE 10 2016 119 677 A1 ist eine Batterieladevorrichtung für das induktive Laden einer Traktionsbatterie eines Flurförderzeugs mit einer Primärspule bekannt, die in einer von einem Flurförderzeug überfahrbaren Bodenfläche eingelassen ist. Dabei ist die Primärspule aus einem oder mehreren, nebeneinander angeordneten Modulen mit jeweiligen Modulspulen aufgebaut. Jedes Modul kann für den Betrieb in Bezug auf ein festgelegtes benachbartes Modul auf einen Betrieb als Verbundmodul oder als Fahrwegmodul eingestellt werden. Im Betrieb als Verbundmodul wird die Modulspule mit dem benachbarten Modul synchron betrieben. Im Betrieb als Fahrwegmodul wird die Modulspule von dem benachbarten Modul aktiviert, wenn dieses ein Flurförderzeug erfasst. Umgekehrt wird das benachbarte Modul aktiviert, wenn durch das Modul selbst ein Flurförderzeug erfasst wird.

Bisher werden die Primärspulen zum dynamischen induktiven Laden, also zum induktiven Laden während der Fahrt, mit der zusätzlichen Leistungselektronik in dem Boden verlegt. Bekannt ist hierbei die Verlegung von Primärspulen unter einer Decke von Asphalt oder Beton. Flurförderzeuge kommen allerdings überwiegend auf Industrieböden von Betriebsgeländen, insbesondere in Betriebshallen, zum Einsatz. Solche Industrieböden sind jedoch nicht veränderbar, weil die Flächen vom Betreiber meistens auch nur gemietet sind. Umbaumaßnahmen von Böden sind entsprechend teuer und werden von Industriekunden meistens nicht akzeptiert.

Vorgeschlagen wurden auch schon auf den Boden auflegbare Betonmodule, in die die Primärspule verbaut ist. Solche Betonmodule sind jedoch nur zum stationären Laden vorgesehen. Außerdem ist die Leistungselektronik außerhalb der Betonmodule angeordnet, was zu einer zusätzlichen Stolpergefahr führt. Ein weiteres Problem stellt die Breite und Höhe der Betonmodule dar. Ein in der Intralogistik übliches autonomes Flurförderzeug mit einer Transportplattform, auch ATP (Autonomous Transport Platform) oder auch Turtle, Autonomous Mobile Robots (AMRs) oder Warehouse Robots genannt, könnte bei solchen Betonmodulen nicht induktiv laden, weil die Bodenfreiheit und der Radabstand derartiger Flurförderzeuge zu gering sind.

Aus der DE 10 2018 209 882 A1 ist ein Ladetunnel zum induktiven Laden eines Fahrzeugs bekannt, der aus baugleichen Tunnelsegmenten gebildet ist.

Die JP 2015 179 704 A1 offenbart eine induktive Ladevorrichtung für ein Flurförderzeug, bei der eine Primärspule in einer Ausnehmung eines aus Aluminium bestehenden Auffahrbleches eingebaut ist und das Auffahrblech am vorderen Ende und am hinteren Ende mit jeweils einer Rampe versehen ist.

Die EP 3 000 934 A1 offenbart einen Straßenbelag, der eine Vertiefung aufweist, in die eine induktive Ladevorrichtung versenkt eingebaut ist. GB 2 522 852 A offenbart Batterieladevorrichtung für induktives Laden umfassend einziges überfahrbares und auflegbares Lademodul mit Primärspule und erste und zweite Rampe am vorderen und am hinteren Ende.WO 2011/043628 A2 offenbart Batterieladevorrichtung für induktives Laden umfassend überfahrbare und im Boden integrierte Lademodule, jedes Lademodul aufweisend eine Primärspule.

Der vorliegenden Erfindung liegt die Aufgabe zugrunde, eine Batterieladevorrichtung der eingangs genannten Art zur Verfügung zu stellen, die ein induktives Laden der Traktionsbatterie während der Fahrt auch bei Fahrzeugen mit geringer Bodenfreiheit ohne bauliche Veränderung des Bodens ermöglicht.

Diese Aufgabe wird erfindungsgemäß dadurch gelöst, dass das mindestens eine Anfangsmodul sowie das mindestens eine Endmodul jeweils eine Rampe aufweisen, über die das Fahrzeug vom Boden auf die Lademodule auf- und abfahren kann.

Die Erfindung geht dabei von einem modularen Aufbau von Primärspulen zum induktiven Laden der Traktionsbatterie des Fahrzeugs, beispielsweise eines Flurförderzeugs, während der Fahrt aus. Der modulare Aufbau setzt sich mindestens aus einem Anfangs- und einem Endmodul zusammen. Die Anfangs- und Endmodule sind jeweils mit einer Rampe versehen, wobei die Rampen derart ausgeführt sind, dass die Fahrzeuge, insbesondere autonome Flurförderzeuge mit einer Transportplattform, beispielweise ATP (Autonomous Transport Platform) oder auch Turtle, Autonomous Mobile Robots (AMRs) oder Warehouse Robots genannt, auf die Lademodule auffahren und wieder abfahren können.

Die Lademodule können beispielsweise einfach auf einem herkömmlichen Industrieboden verlegt werden, ohne dass bauliche Veränderung am Boden selbst erforderlich sind.

Gemäß einer besonders bevorzugten Ausgestaltung der Erfindung sind die Lademodule aus Beton, insbesondere Polymerbeton oder Kunststoffvarianten, gefertigt, wobei die Primärspule in den Beton eingelassen ist. Für die Lademodule eignen sich alle magnetisierbaren Materialien, beispielsweise normaler Beton, Polymerbeton oder Kunststoffvarianten. Diesen magnetisierbaren Materialien können weiterhin unterschiedliche Trägermaterialien als magnetisierbare Partikel hinzugefügt werden, beispielsweise Granitteile, um eine bessere Leistungsübertragung zu erreichen. Ein derartiger magnetisierbarer Beton, d.h. einem Beton, dem magnetisierbare Partikel hinzugefügt sind, weist dieselben statischen Eigenschaften wie jeder andere Beton auf. Das Fahrzeug kann somit problemlos auf dem von den Lademodulen gebildeten Fahrweg fahren. Durch Einbettung der Primärspule in den Beton entsteht jedoch ein magnetisierbares Bauteil, so dass elektrische Leistung berührungslos von der Primärspule des Bauteils auf die Sekundärspule des Fahrzeugs übertragen werden kann, um die Traktionsbatterie des Fahrzeugs zu laden.

Vorteilhafterweise enthält jedes Lademodul eine eigene Leistungselektronik. Die Lademodule weisen somit jeweils eine Primärspule und eine Leistungselektronik zum Betrieb der Primärspule auf. Somit ist jedes Lademodul autark betreibbar. Außerdem kann dadurch auf Verbindungskabel zu einer externen Leistungselektronik verzichtet werden, wodurch eventuelle Stolperfallen vermieden werden können.

Eine bevorzugte Weiterbildung der Erfindung sieht vor, dass die Lademodule Spurführungen für das Fahrzeug aufweisen, um eine besonders sichere Fahrt des Fahrzeugs auf den Lademodulen zu ermöglichen.

Dabei sind die Spurführungen in einer zweckmäßigen Ausgestaltung der Erfindung als Aussparungen in der Oberfläche der Lademodule ausgebildet. Hierzu können beispielsweise Spurrillen als Aussparungen für Räder der auf den Lademodulen fahrenden Fahrzeuge in die Oberfläche der Lademodule eingebracht sein.

Auch Schienenführungen können als Spurführungen vorgesehen sein. Hierzu können Schienen in die Oberfläche der Lademodule eingelassen sein. Die Schienen können auch ähnlich wie Eisenbahnschienen auf der Oberfläche der Lademodule angebracht sein.

Die Spurführungen können eine oder zwei parallel angeordnete oder mehrere parallel angeordnete Aussparungen bzw. Schienen umfassen. Bei einer Ausgestaltung mit zwei Aussparungen bzw. Schienen können kleine autonome fahrende Transportplattformen (ATPs) beispielsweise die beiden Aussparungen bzw. Schienen benutzen, während Gabelstapler mit einer größeren Spurbreite nur eine Aussparung bzw. Schiene nutzen und die andere Aussparung bzw. Schiene überfahren.

In einer besonders vorteilhaften Ausführungsform der Erfindung weisen die Lademodule mechanische Steckverbindungen auf, über die die nebeneinander angeordneten Lademodule derart mechanisch, beispielsweise formschlüssig, miteinander verbindbar sind, dass eine Überfahrt des Fahrzeugs zwischen den nebeneinander angeordneten Lademodulen ermöglicht wird.

Zweckmäßigerweise verfügen die Lademodule auch über Stromversorgungs-Schnittstellen, über die die nebeneinander angeordneten Lademodule elektrisch miteinander verbindbar und über mindestens eine zu mindestens einem Lademodul geführte Stromleitung an ein Stromnetz anschließbar sind. Somit genügt zur Stromversorgung der Lademodule eine zentrale Stromleitung vom Stromnetz zu einem der Lademodule. Alle weiteren Lademodule können über die Stromversorgungs-Schnittstellen der Lademodule versorgt werden.

Eine weitere vorteilhafte Ausgestaltung sieht vor, dass die Lademodule Datenkommunikations-Schnittstellen aufweisen, über die die nebeneinander angeordneten Lademodule kommunizieren können. Die Kommunikation zwischen den Lademodulen ist wichtig, weil diese nacheinander geschaltet werden, je nachdem, wo sich das Fahrzeug aktuell befindet. Beispielsweise kann das Lademodul von dem benachbarten Lademodul eine Information erhalten, dass sich ein Fahrzeug annähert. Es kann dann mit einer Verzögerung, aber auch bewusst bereits vorab eine Aktivierung der eigenen Primärspule erfolgen. Durch letzteres werden auftretende Latenzzeiten bei der Bereitstellung der elektrischen Ladeleistung minimiert. Mit den Lademodulen können somit Fahrwege gebildet werden, mit denen die Traktionsbatterie des Fahrzeugs während der Fahrt wieder aufgeladen werden kann.

Die Datenkommunikations-Schnittstelle der Lademodule kann von Datenkabeln mit entsprechender Steckverbindung gebildet sein. Dadurch kann eine optimale Datenübertragung zwischen den Lademodulen in einfacher Weise erzielt werden.

In einer zweckmäßigen Ausgestaltung sind die Stromversorgungs-Schnittstellen und/oder die Datenkommunikations-Schnittstellen in die mechanischen Steckverbindungen integriert.

Zur leichteren Handhabung der Lademodule weisen die Lademodule bevorzugt Transporteinrichtungen für einen Transport der Lademodule durch ein Flurförderzeug auf. Dabei können die Transporteinrichtungen als Aussparungen für Gabelzinken eines Flurförderzeugs ausgebildet sein. Auf diese Weise können die Lademodule beispielsweise einfach mit Hilfe eines Flurförderzeugs, beispielsweise eines Gabelstaplers, an einen beliebigen Platz in einer Halle transportiert werden. Somit ist ein flexibles Verlegen der Lademodule gewährleistet.

Ein flexibles Verlegen der Lademodule wird in einer bevorzugten Ausgestaltung der Erfindung auch dadurch erleichtert, dass zwischen dem Anfangsmodul und dem Endmodul mindestens ein Zwischenmodul vorgesehen ist. Somit können das Anfangsmodul und das Endmodul beliebig um weitere Zwischenmodule erweitert werden, um den möglichen Fahrweg des Fahrzeugs auf den Lademodulen zu verlängern.

Dabei können die Zwischenmodule geradlinig geformte und/oder kurvenförmig geformte und/oder brückenartig geformte Zwischenmodule umfassen. Geradlinig geformte Zwischenmodule können verwendet werden, um den Fahrweg in gerader Richtung zu verlängern. Mit kurvenförmig geformten Zwischenmodulen können auch in Kurven verlaufende Fahrwege realisiert werden, um eine größtmögliche Anpassung an örtliche Gegebenheiten zu ermöglichen. Brückenartig geformte Zwischenmodule können beispielsweise an Kreuzungspunkten eingesetzt werden, um insbesondere mit kleineren Fahrzeuge andere Fahrwege zu überbrücken und zu überqueren.

Durch eine Standardisierung der Lademodule, insbesondere der Zwischenmodule kann bei größeren Stückzahlen eine Kostenreduzierung erreicht werden.

Gemäß einer Weiterbildung der Erfindung ist vorgesehen, dass die Lademodule Gewichtssensoren aufweisen, die Fremdgegenstände auf den Lademodulen erkennen können. Auf diese Weise kann eine eventuelle Brandgefahr durch Fremdgegenstände, die sich im Betrieb der Primärspule des Lademoduls erhitzen könnten, verhindert werden.

Gemäß einer Weiterbildung der Erfindung sind die Lademodule einspurig oder mehrspurig ausgebildet und/oder einspurig oder mehrspurig verlegbar. Somit können mit den erfindungsgemäßen Lademodulen einspurige oder mehrspurige Fahrwege für das dynamische Laden von Fahrzeugen geschaffen werden, die auch eine Nutzung im Gegenverkehr der Fahrzeuge ermöglichen.

Die Erfindung bietet eine ganze Reihe von Vorteilen:
Durch die Einbettung der Primärspule und der Leistungselektronik in die Lademodule, insbesondere durch das Einlassen in Beton, beispielsweise normaler Beton, Polymerbeton oder Kunststoffvarianten, werden diese Bauteile sicher vor Umwelteinflüssen geschützt. Der modulare Aufbau der Spulentechnologie ermöglicht eine schnelle Kontaktierbarkeit. Es ist kein Eingriff in die Hallenumgebung erforderlich. Die Erfindung ist flexibel im Raum, beispielsweise innerhalb einer Betriebshalle, einsetzbar und flexibel erweiterbar. Außerdem sind die Lademodule flexibel verlegbar, falls der meistbefahrene Fahrweg sich ändert. Es können auch kleine Hallen und Plätze zum induktiven Laden von Traktionsbatterien von Fahrzeugen können genutzt werden. Die Lademodule können einspurig oder mehrspurig ausgebildet sein bzw. einspurig oder mehrspurig verlegt werden, so dass Fahrwege für das dynamische induktive Laden von Fahrzeugen gebildet werden können, die auch im Gegenverkehr der Fahrzeuge genutzt werden können.

Weitere Vorteile und Einzelheiten der Erfindung werden anhand der in den schematischen Figuren dargestellten Ausführungsbeispiele näher erläutert. Hierbei zeigen
- Figur 1: eine perspektivische Darstellung des Anfangsmoduls und des Endmoduls der Batterieladevorrichtung,
- Figur 2: ein Prinzipbild der Batterieladevorrichtung mit Lademodulen und einem darüber fahrenden Fahrzeug,
- Figur 3: eine perspektivische Darstellung von geradlinig geformten Zwischenmodulen,
- Figur 4: eine perspektivische Darstellung eines kurvenförmig geformten Zwischenmoduls und
- Figur 5: eine perspektivische Darstellung eines brückenartig geformten Zwischenmoduls.

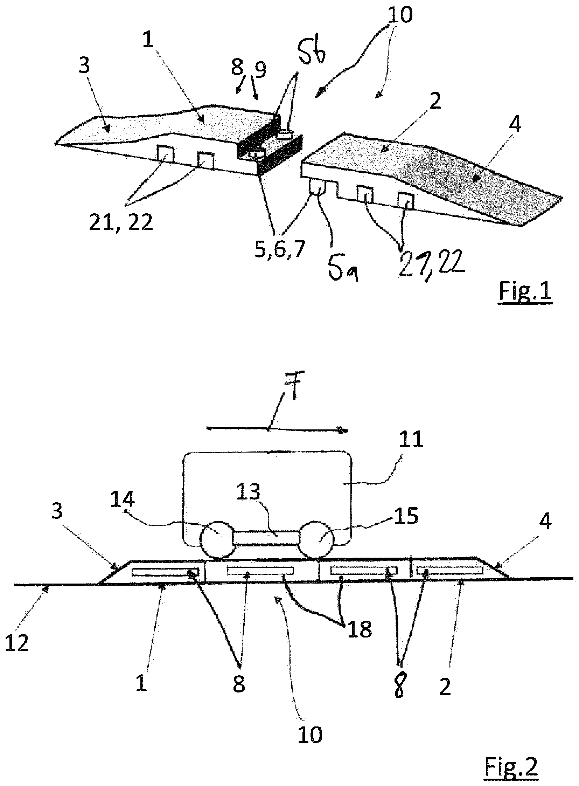

In der Figur 1 sind das Anfangsmodul 1 und das Endmodul 2 der erfindungsgemäßen Batterieladevorrichtung dargestellt. Das Anfangsmodul 1 weist eine Rampe 3 auf und das Endmodul 2 weist eine Rampe 4 auf. Über die Rampen 3 und 4 kann das in der Figur 1 nicht dargestellte Fahrzeug auf das Anfangsmodul 1 auffahren und von dem Endmodul 2 wieder abfahren.

Die Rampensteigungen der Rampen 3, 4 sind derart flach ausgeführt, dass Flurförderzeug mit geringer Bodenfreiheit, beispielsweise autonome fahrende Flurförderzeuge mit Transportplattform (ATP oder auch Turtle, Autonomous Mobile Robot oder Warehouse Robot) auf das Anfangsmodul 1 auffahren können und von dem Endmodul 2 abfahren können.

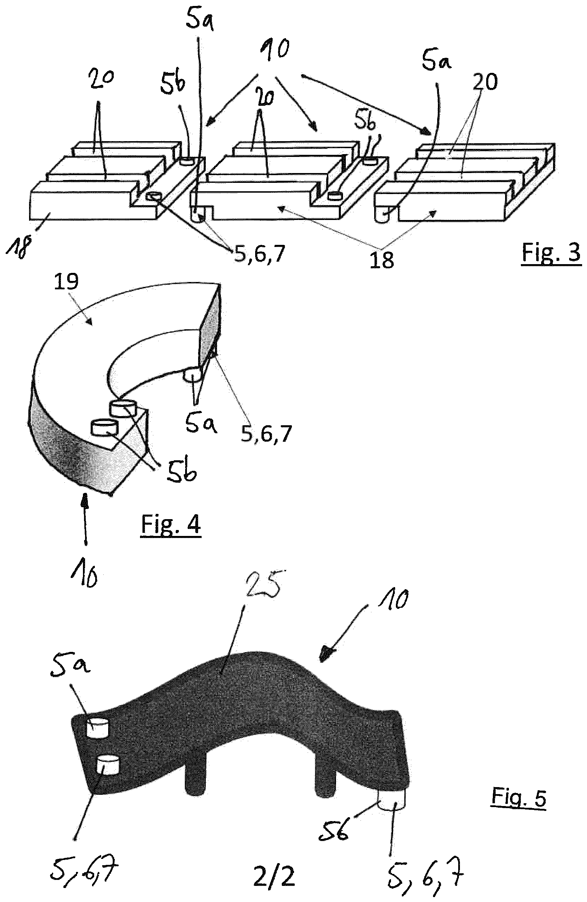

Das Anfangsmodul 1 und das Endmodul 2 können über die mechanischen Steckverbindungen 5 miteinander direkt oder über, in den Figuren 3 bis 5 dargestellte Zwischenmodule 18, 19, 25 mechanisch fest verbunden werden. Das Anfangsmodul 1 und das Endmodul 2 sowie die Zwischenmodule 18, 19, 25 bilden die Lademodule 10 der Batterieladevorrichtung.

Die mechanischen Steckverbindungen 5 der Lademodule 10 können von entsprechenden Zapfen 5a und Zapfenaufnahmen 5b in den Lademodulen 10 gebildet sein. Die Zapfen 5a und Zapfenaufnahmen 5b können beliebiger Bauform sein, beispielsweise rund oder dreiecksförmig oder eckig.

In die mechanischen Steckverbindungen 5 sind weiterhin in dem dargestellten Ausführungsbeispiel Stromversorgungs-Schnittstellen 6 und/oder Datenkommunikations-Schnittstellen 7 integriert.

Im Inneren der Lademodule 10 sind jeweils eine Primärspule 8 und eine Leistungselektronik 9 angeordnet. Falls die Lademodule 10 aus Beton gefertigt sind, sind die Primärspule 8 und die Leistungselektronik 9 in den Beton eingelassen.

Zum leichteren Transport der Lademodule 10 verfügen die Lademodule 10 über, als seitliche Aussparungen 21 in Form von Einfahrtaschen für Gabelzinken eines Flurförderzeugs, ausgebildete Transporteinrichtungen 22. Auf diese Weise können die Lademodule 10 beispielsweise einfach mit Hilfe eines Flurförderzeugs, beispielsweise eines Gabelstaplers, an einen beliebigen Platz in einer Halle transportiert werden. Somit ist ein flexibles Verlegen der Lademodule gewährleistet.

Die Figur 2 zeigt schematisch eine Batterieladevorrichtung mit Lademodulen 10 und einem auf den Lademodulen 10 fahrenden, insbesondere als Flurförderzeug, beispielsweise autonom fahrendes Flurförderzeug mit einer Transportplattform (ATP oder auch Turtle, Autonomous Mobile Robot oder Warehouse Robot), ausgebildeten, Fahrzeug 11. Die Lademodule 10 sind in Fahrtrichtung F des Fahrzeugs 11 nebeneinander angeordnet. Die auf den Boden 12 aufgelegten Lademodule 10 weisen jeweils eine Primärspule 8 auf, während das Fahrzeug 11, an der Unterseite angeordnet, eine entsprechende Sekundärspule 13 zwischen einer Vorderachse 14 und einer Hinterachse 15 aufweist. Von der Primärspule 8 wird induktiv in die Sekundärspule 13 des Fahrzeugs 11 elektrische Energie übertragen, um die Traktionsbatterie des Fahrzeugs 11 aufzuladen.

Da jedes der Lademodule 10 über eine eigene Primärspule 8 verfügt, kann die Traktionsbatterie des Fahrzeugs 11 auch während der Überfahrt des Fahrzeugs 11 über die Lademodule 10 geladen werden.

Die Lademodule 10 umfassen das Anfangsmodul 1 und das Endmodul 2 sowie mindestens ein Zwischenmodul 18. Das Anfangsmodul 1 und das Endmodul 2 verfügen über die Rampen 3 und 4, über die das Fahrzeug 11 vom Boden 12 auf die Lademodule 10 auffahren und wieder abfahren kann.

Die Breite der Lademodule 10 ist derart ausgeführt, dass das Fahrzeugs 11 auf den Lademodulen 10 (Anfangsmodul 1, Zwischenmodul 18, Endmodul 2) und somit auf den Primärspulen 8 fahren kann.

Die Figur 3 zeigt eine perspektivische Darstellung von geradlinig geformten Zwischenmodulen 18. Die Zwischenmodule 18 können über die mechanischen Steckverbindungen 5 mit einem anderen Zwischenmodul 18, 19, 25 oder mit dem Anfangsmodul 1 oder dem Endmodul 2 verbunden werden. In die mechanischen Steckverbindungen 5 sind auch Stromversorgungs-Schnittstellen 6 und/oder Datenkommunikations-Schnittstellen 7 integriert. Die geradlinig geformten Zwischenmodule 18 können verwendet werden, um den Fahrweg in gerader Richtung zu verlängern.

Die Lademodule 10 verfügen weiterhin über Spurführungen 20, um eine sichere Fahrt des Fahrzeugs 11 auf den Lademodulen 10 zu gewährleisten. In der Figur 3 sind die Spurführungen 20 von zwei parallel angeordneten Aussparungen in der Oberfläche der Lademodule 10 gebildet.

Die Figur 4 zeigt eine perspektivische Darstellung eines kurvenförmig geformten Zwischenmoduls 19. Das Zwischenmodul 19 kann ebenfalls über die mechanischen Steckverbindungen 5 mit einem Zwischenmodul 18, 19, 25 oder mit dem Anfangsmodul 1 oder dem Endmodul 2 mechanisch fest verbunden werden. In die mechanischen Steckverbindungen 5 sind auch Stromversorgungs-Schnittstellen 6 und/oder Datenkommunikations-Schnittstellen 7 integriert. Mit den kurvenförmig geformten Zwischenmodulen 19 können auch in Kurven verlaufende Fahrwege realisiert werden, um eine größtmögliche Anpassung an örtliche Gegebenheiten zu ermöglichen.

Die Figur 5 zeigt eine perspektivische Darstellung eines brückenartig geformten Zwischenmoduls 25. Das Zwischenmodul 25 kann ebenfalls über die mechanischen Steckverbindungen 5 mit einem Zwischenmodul 18, 19, 25 oder mit dem Anfangsmodul 1 oder dem Endmodul 2 mechanisch fest verbunden werden. In die mechanischen Steckverbindungen 5 sind auch Stromversorgungs-Schnittstellen 6 und/oder Datenkommunikations-Schnittstellen 7 integriert. Mit einem brückenartig geformten Zwischenmodul 25 kann beispielsweise an einem Kreuzungspunkt ein anderer Fahrweg überbrückt und überquert werden.

## Patentansprüche

1. Batterieladevorrichtung für induktives Laden, insbesondere dynamisches und/oder stationäres induktives Laden, einer Traktionsbatterie eines, auf einem Boden (12) fahrbaren, Fahrzeugs (11), insbesondere eines bodengebundenen Flurförderzeugs, mit nebeneinander angeordneten, vom Fahrzeug (11) überfahrbaren, Lademodulen (10), in denen jeweils mindestens eine Primärspule (8) angeordnet ist, welche elektrische Leistung an eine Sekundärspule (13) des Fahrzeugs (11) übertragen kann, so dass die Traktionsbatterie während der Überfahrt des Fahrzeugs (11) geladen werden kann, wobei die Lademodule (10) auf den Boden (12) auflegbar sind und mindestens ein Anfangsmodul (1) sowie mindestens ein Endmodul (2) umfassen, **dadurch gekennzeichnet, dass** das mindestens eine Anfangsmodul (1) sowie das mindestens eine Endmodul (2) jeweils eine Rampe (3, 4) aufweisen, über die das Fahrzeug (11) vom Boden (12) auf die Lademodule (10) auf- und abfahren kann.

2. Batterieladevorrichtung nach Anspruch 1, **dadurch gekennzeichnet, dass** die Lademodule (10) aus Beton gefertigt sind, wobei die Primärspule (8) in den Beton eingelassen ist.

3. Batterieladevorrichtung nach Anspruch 1 oder 2, **dadurch gekennzeichnet, dass** jedes Lademodul (10) eine eigene Leistungselektronik (9) enthält.

4. Batterieladevorrichtung nach einem der Ansprüche 1 bis 3, **dadurch gekennzeichnet, dass** die Lademodule (10) Spurführungen (20) für das Fahrzeug (11) aufweisen.

5. Batterieladevorrichtung nach Anspruch 4, **dadurch gekennzeichnet, dass** die Spurführungen (20) als Aussparungen in der Oberfläche der Lademodule (10) ausgebildet sind.

6. Batterieladevorrichtung nach Anspruch 4, **dadurch gekennzeichnet, dass** die Spurführungen (20) als Schienen ausgebildet sind, die auf der Oberfläche der Lademodule (10) aufgebracht sind.

7. Batterieladevorrichtung nach einem der Ansprüche 1 bis 6, **dadurch gekennzeichnet, dass** die Lademodule (10) mechanische Steckverbindungen (5) aufweisen, über die die nebeneinander angeordneten Lademodule (10) derart mechanisch miteinander verbindbar sind, dass eine Überfahrt des Fahrzeugs (11) zwischen den nebeneinander angeordneten Lademodulen (10) ermöglicht wird.

8. Batterieladevorrichtung nach einem der Ansprüche 1 bis 7, **dadurch gekennzeichnet, dass** die Lademodule (10) Stromversorgungs-Schnittstellen (6) aufweisen, über die die nebeneinander angeordneten Lademodule (10) elektrisch miteinander verbindbar und über mindestens eine zu mindestens einem Lademodul (10) geführte Stromleitung an ein Stromnetz anschließbar sind.

9. Batterieladevorrichtung nach einem der Ansprüche 1 bis 8, **dadurch gekennzeichnet, dass** die Lademodule (10) Datenkommunikations-Schnittstellen (7) aufweisen, über die die nebeneinander angeordneten Lademodule (10) kommunizieren können.

10. Batterieladevorrichtung nach Anspruch 7 und Anspruch 8 und/oder Anspruch 9, **dadurch gekennzeichnet, dass** die Stromversorgungs-Schnittstellen (6) und/oder die Datenkommunikations-Schnittstellen (7) in die mechanischen Steckverbindungen (5) integriert sind.

11. Batterieladevorrichtung nach den Ansprüchen 1 bis 10, **dadurch gekennzeichnet, dass** die Lademodule (10) Transporteinrichtungen (22) für einen Transport der Lademodule (10) durch ein Flurförderzeug aufweisen.

12. Batterieladevorrichtung nach Anspruch 11, **dadurch gekennzeichnet, dass** die Transporteinrichtungen (22) als Aussparungen (21) für Gabelzinken eines Flurförderzeugs ausgebildet sind.

13. Batterieladevorrichtung nach einem der Ansprüche 1 bis 12, **dadurch gekennzeichnet, dass** zwischen dem Anfangsmodul (1) und dem Endmodul (2) mindestens ein Zwischenmodul (18, 19, 25) vorgesehen ist.

14. Batterieladevorrichtung nach Anspruch 13, **dadurch gekennzeichnet, dass** mehrere Zwischenmodule (18, 19, 25) vorgesehen sind und die Zwischenmodule (18, 19, 25) geradlinig geformte und/oder kurvenförmig geformte und/oder brückenartig geformte Zwischenmodule (18, 19, 25) umfassen.

15. Batterieladevorrichtung nach einem der Ansprüche 1 bis 14, **dadurch gekennzeichnet, dass** die Lademodule (10) Gewichtssensoren aufweisen, die Fremdgegenstände auf den Lademodulen (10) erkennen können.

16. Batterieladevorrichtung nach einem der Ansprüche 1 bis 15, **dadurch gekennzeichnet, dass** die Lademodule (10) einspurig oder mehrspurig ausgebildet sind und/oder einspurig oder mehrspurig verlegbar sind.

## Claims

1. Battery charging device for inductive charging, in particular dynamic and/or stationary inductive charging, of a traction battery of a vehicle (11) that is able to be driven on the ground (12), in particular a ground-based industrial truck, comprising charging modules (10), which are arranged next to one another and are driven over by the vehicle (11), in each of which at least one primary coil (8) is arranged, which is able to transmit electrical power to a secondary coil (13) of the vehicle (11) such that the traction battery is able to be charged while the vehicle (11) is driving over, wherein the charging modules (10) are able to be placed on the ground (12) and comprise at least one initial module (1) and at least one end module (2), **characterized in that** the at least one initial module (1) and the at least one end module (2) each have a ramp (3, 4), by way of which the vehicle (11) is able to drive onto/off the charging modules (10) from/onto the ground (12).

2. Battery charging device according to Claim 1, **characterized in that** the charging modules (10) are produced from concrete, wherein the primary coil (8) is embedded in the concrete.

3. Battery charging device according to Claim 1 or 2, **characterized in that** each charging module (10) contains its own power electronics (9).

4. Battery charging device according to one of Claims 1 to 3, **characterized in that** the charging modules (10) have track guides (20) for the vehicle (11).

5. Battery charging device according to Claim 4, **characterized in that** the track guides (20) are in the form of recesses in the surface of the charging modules (10) .

6. Battery charging device according to Claim 4, **characterized in that** the track guides (20) are in the form of rails that are applied to the surface of the charging modules (10).

7. Battery charging device according to one of Claims 1 to 6, **characterized in that** the charging modules (10) have mechanical plug connections (5), by way of which the charging modules (10) that are arranged next to one another are able to be mechanically connected to one another in such a way that it is possible for the vehicle (11) to drive over between the charging modules (10) that are arranged next to one another.

8. Battery charging device according to one of Claims 1 to 7, **characterized in that** the charging modules (10) have power supply interfaces (6), by way of which the charging modules (10) that are arranged next to one another are able to be electrically connected to one another and able to be connected to a power grid via at least one power line routed to at least one charging module (10).

9. Battery charging device according to one of Claims 1 to 8, **characterized in that** the charging modules (10) have data communication interfaces (7), by way of which the charging modules (10) that are arranged next to one another are able to communicate.

10. Battery charging device according to Claim 7 and Claim 8 and/or Claim 9, **characterized in that** the power supply interfaces (6) and/or the data communication interfaces (7) are integrated into the mechanical plug connections (5).

11. Battery charging device according to one of Claims 1 to 10, **characterized in that** the charging modules (10) have transport apparatuses (22) for transporting the charging modules (10) by an industrial truck.

12. Battery charging device according to Claim 11, **characterized in that** the transport apparatuses (22) are in the form of recesses (21) for fork tines of an industrial truck.

13. Battery charging device according to one of Claims 1 to 12, **characterized in that** at least one intermediate module (18, 19, 25) is provided between the initial module (1) and the end module (2).

14. Battery charging device according to Claim 13, **characterized in that** a plurality of intermediate modules (18, 19, 25) are provided and the intermediate modules (18, 19, 25) comprise rectilinearly shaped and/or curved and/or bridge-shaped intermediate modules (18, 19, 25).

15. Battery charging device according to one of Claims 1 to 14, **characterized in that** the charging modules (10) have weight sensors that are able to detect foreign objects on the charging modules (10).

16. Battery charging device according to one of Claims 1 to 15, **characterized in that** the charging modules (10) are of single-track or multiple-track design and/or are able to be laid as a single track or multiple tracks.

## Revendications

1. Dispositif de charge de batterie destiné à la charge inductive, en particulier la charge inductive dynamique et/ou stationnaire, d'une batterie de traction d'un véhicule (11) pouvant rouler sur un sol (12), notamment d'un convoyeur au sol, ledit dispositif de charge de batterie comprenant des modules de charge (10) qui sont disposés les uns à côté des autres, sur lesquels le véhicule (11) peut passer et dans chacun desquels est disposée au moins une bobine primaire (8) qui peut transmettre de l'énergie électrique à une bobine secondaire (13) du véhicule (11) afin que la batterie de traction puisse être chargée pendant le passage du véhicule (11), les modules de charge (10) pouvant être posés sur le sol (12) et comprenant au moins un module initial (1) et au moins un module final (2), **caractérisé en ce que** l'au moins un module initial (1) et l'au moins un module final (2) comportent chacun une rampe (3, 4) permettant au véhicule (11) de monter du sol (12) sur les modules de charge (10) et d'en descendre.

2. Dispositif de charge de batterie selon la revendication 1, **caractérisé en ce que** les modules de charge (10) sont en béton, la bobine primaire (8) étant noyée dans le béton.

3. Dispositif de charge de batterie selon la revendication 1 ou 2, **caractérisé en ce que** chaque module de charge (10) contient sa propre électronique de puissance (9).

4. Dispositif de charge de batterie selon l'une des revendications 1 à 3, **caractérisé en ce que** les modules de charge (10) comportent des pistes de guidage (20) destinées au véhicule (11).

5. Dispositif de charge de batterie selon la revendication 4, **caractérisé en ce que** les pistes de guidage (20) sont conçues sous forme d'évidements ménagés dans la surface des modules de charge (10).

6. Dispositif de charge de batterie selon la revendication 4, **caractérisé en ce que** les pistes de guidage (20) sont conçues sous forme de rails qui sont appliqués sur la surface des modules de charge (10).

7. Dispositif de charge de batterie selon l'une des revendications 1 à 6, **caractérisé en ce que** les modules de charge (10) comportent des liaisons enfichables mécaniques (5) permettant de relier mécaniquement entre eux les modules de charge (10) disposés les uns à côté des autres pour permettre le passage du véhicule (11) entre les modules de charge (10) disposés les uns à côté des autres.

8. Dispositif de charge de batterie selon l'une des revendications 1 à 7, **caractérisé en ce que** les modules de charge (10) comportent des interfaces d'alimentation en courant (6) permettant de relier électriquement entre eux les modules de charge (10) disposés les uns à côté des autres et de les raccorder à un réseau électrique par le biais d'au moins une ligne électrique menant à au moins un module de charge (10).

9. Dispositif de charge de batterie selon l'une des revendications 1 à 8, **caractérisé en ce que** les modules de charge (10) comportent des interfaces de communication de données (7) permettant aux modules de charge (10) disposés les uns à côté des autres de communiquer.

10. Dispositif de charge de batterie selon la revendication 7 et la revendication 8 et/ou la revendication 9, **caractérisé en ce que** les interfaces d'alimentation en courant (6) et/ou les interfaces de communication de données (7) sont intégrées dans les liaisons enfichables mécaniques (5).

11. Dispositif de charge de batterie selon les revendications 1 à 10, **caractérisé en ce que** les modules de charge (10) comportent des éléments de transport (22) destinés à transporter les modules de charge (10) à l'aide d'un convoyeur au sol.

12. Dispositif de charge de batterie selon la revendication 11, **caractérisé en ce que** les éléments de transport (22) sont conçus sous la forme d'évidements (21) destinés aux bras de fourche d'un convoyeur au sol.

13. Dispositif de charge de batterie selon l'une des revendications 1 à 12, **caractérisé en ce qu'**au moins un module intermédiaire (18, 19, 25) est prévu entre le module initial (1) et le module final (2).

14. Dispositif de charge de batterie selon la revendication 13, **caractérisé en ce que** plusieurs modules intermédiaires (18, 19, 25) sont prévus et les modules intermédiaires (18, 19, 25) comprennent des modules intermédiaires (18, 19, 25) de forme rectiligne et/ou incurvée et/ou de type pont.

15. Dispositif de charge de batterie selon l'une des revendications 1 à 14, **caractérisé en ce que** les modules de charge (10) comportent des capteurs de poids qui peuvent détecter des objets étrangers sur les modules de charge (10).

16. Dispositif de charge de batterie selon l'une des revendications 1 à 15, **caractérisé en ce que** les modules de charge (10) sont conçus pour être monovoie ou multivoie et/ou peuvent être posés en monovoie ou multivoie.
